# FASCICULE DE BREVET EUROPEEN

(11) **EP 1 501 270 B1**
(45) Date de publication et mention de la délivrance du brevet: **16.08.2006**
(21) Numéro de dépôt: 04291552.0
(22) Date de dépôt: 18.06.2004
(51) Int. Cl.: H04M 3/533

(54) **Procédé et système d'adaptation du service de messagerie électronique d'un utilisateur**
Verfahren und System zum Anpassen des Nachrichtendienstes eines Benutzers
Method and system for adapting the messaging system of a user

(30) Priorité: 24.07.2003 FR 0309083
(43) Date de publication de la demande: 26.01.2005
(73) Titulaire: FRANCE TELECOM, 75015 Paris (FR)
(72) Inventeur: Bailleul, Nicolas, 14440 Douvres la Delivrande (FR); Kerdraon, Alan, 14000 Caen (FR); Rebillon, Jacques-Olivier, 14000 Caen (FR)
(74) Mandataire: de Roquemaurel, Bruno

(56) Documents cités:
- EP-A- 1 113 631
- EP-A- 1 261 179
- DE-U- 20 114 859

## Description

La présente invention concerne le domaine des services de télécommunications et en particulier, les services de messagerie électronique et de transmission de fichiers.

De tels services permettent à deux utilisateurs équipés d'un terminal respectif connecté à un réseau de transmission de données tel que le réseau Internet, et exécutant à cet effet une application de messagerie électronique, de s'échanger des messages et des fichiers numériques.

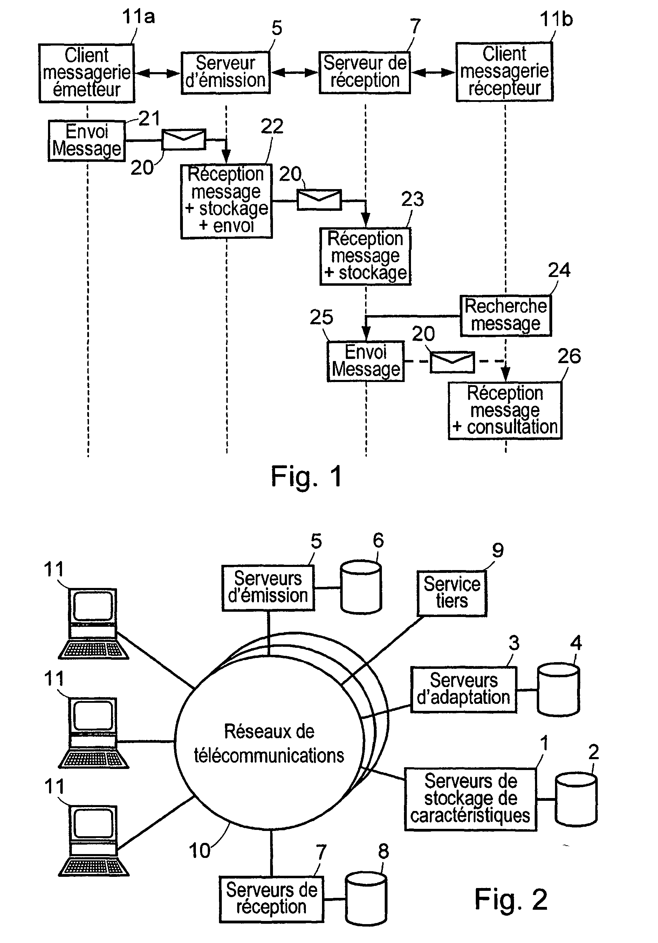

Dans un tel service illustré par la figure 1, l'utilisateur émetteur compose un message 20 qu'il souhaite envoyer à un utilisateur destinataire, à l'aide d'une application cliente de messagerie électronique 11a, en fournissant l'adresse de ce dernier et éventuellement un degré d'urgence. Une fois composé le message est envoyé dans le réseau par l'application cliente de messagerie (étape 21). Ce message est reçu à l'étape 22 par un serveur d'émission 5 connecté au réseau et stocké par celui-ci dans une zone de stockage 6 de messages, gérée en file d'attente FIFO (First In First Out). Le serveur d'émission 5 envoie ensuite le message vers un serveur de réception 7 qui gère la boîte de réception 8 de l'utilisateur destinataire. Le serveur d'émission 5 envoie prioritairement les messages urgents vers les serveurs de réception correspondants, le message ainsi envoyé est reçu à l'étape 23 par le serveur de réception gérant a boîte de réception de l'utilisateur destinataire.

Lorsque l'utilisateur destinataire souhaite consulter sa boîte de réception, il active une application cliente de messagerie 11b sur l'un de ses terminaux. L'application cliente interroge alors la boîte de réception de l'utilisateur destinataire (étape 24) et le serveur de réception 7 transmet en réponse (étape 25) les éventuels messages 20 stockés dans la boîte de réception, l'application cliente 11b recevant ces messages à l'étape 26.

Dans le cas d'un message urgent, si l'utilisateur destinataire n'a pas consulté sa boîte de réception pendant une certaine période paramétrable, l'émetteur est informé que son message urgent n'a pas été consulté par le destinataire.

La description qui précède fait apparaître plusieurs problèmes.
Un message urgent peut ne pas être délivré : la délivrance des messages est laissée à l'initiative du récepteur qui décide de consulter sa boîte de réception.
Si l'utilisateur ne lance pas son application de messagerie sur son terminal, il n'aura jamais accès au message, même s'il possède d'autres services d'information sur son terminal.
Si le terminal de l'utilisateur destinataire n'est pas adapté pour recevoir le message, par exemple du fait que le message contient un fichier multimédia et que le terminal n'est pas équipé du périphérique multimédia adéquat, ou encore du fait que le terminal présente une taille mémoire insuffisante, le message ne peut pas être délivré dans des conditions satisfaisantes.
Si l'utilisateur destinataire a des préférences ou des habitudes quant à la réception de certains messages en fonction de la nature de ceux-ci, de leur émetteur ou de leur degré d'urgence, elles ne sont pas prises en compte.

En fait, dans ce service de messagerie, le service de réception de message et le terminal de réception utilisés sont choisis a priori, sans connaître la nature et le contenu précis du message.

**La demande de brevet EP 1 113 631 intitulé « Method and device for integrated multimedia messaging service » décrit un service de messagerie multimédia permettant aux utilisateurs d'émettre ou de recevoir des messages dans différents formats, avec une possibilité de conversion de format. L'utilisateur peut configurer le service de délivrance de messages en spécifiant le format souhaité de réception des messages, les règles d'attribution de niveau de priorité aux messages en fonction de critères portant notamment sur l'identité de l'émetteur ou l'obiet du messape, un terminal vers lequel doivent être renvoyés les messages, et un terminal vers lequel doit être notifié la réception d'un message.**

**Cependant, le service de messagerie multimédia proposé s'identifie à un système de messagerie unifié (messagerie électronique, messagerie vocale, SMS, ...) destiné à remplacer tous les systèmes existants, et ne permet donc pas d'acheminer et de restituer, d'une manière plus adaptée, au contenu des messages et aux caractéristiques des moyens contenus dans les terminaux des utilisateurs.**

En résumé, les systèmes de messagerie ne sont en général conçus ni pour déterminer le terminal le mieux adapté pour recevoir un message, ou le service de restitution le mieux adapté pour restituer le contenu du message, ni pour prendre en compte d'éventuelles préférences de l'utilisateur destinataire du message.

La présente invention a pour but de supprimer ces inconvénients. Cet objectif est atteint par la prévision d'un procédé d'adaptation d'un service de messagerie électronique accessible par l'intermédiaire de terminaux d'utilisateurs susceptibles d'être connectés à au moins un réseau de transmission de données, comprenant des étapes consistant à :
- transmettre un message d'un terminal d'utilisateur émetteur vers un utilisateur destinataire,
- recevoir le message par un serveur d'émission auquel le terminal d'utilisateur émetteur est connecté par l'intermédiaire du réseau de transmission de données, et
transmettre le message par l'intermédiaire du réseau de transmission de données, du serveur d'émission vers un serveur de réception de l'utilisateur destinataire, et stocker le message dans une boîte de réception de l'utilisateur destinataire.

Selon l'invention, ce procédé comprend en outre des étapes consistant à :
- interroger les boîtes de réception d'un ensemble d'utilisateurs abonnés pour collecter les messages reçus, insérés dans celles-ci, et
- pour chacun des messages reçus pour un utilisateur abonné, analyser le contenu du message, rechercher des caractéristiques correspondant à l'utilisateur abonné, sélectionner des moyens de délivrance et de restitution du message adaptés aux caractéristiques trouvées, et transmettre le message à l'utilisateur abonné en tenant compte des moyens de délivrance et de restitution sélectionnés.

**Les caractéristiques correspondant à l'utilisateur abonné comprennent des caractéristiques de terminaux et de connexions respectives de ces** t**erminaux réseaux, le choix des moyens de délivrance et restitution du message consistant à choisir parmi des terminaux accessibles de l'utilisateur destinataire du message, en fonction des caractéristiques de ces terminaux et de leur connexion à un réseau et des caractéristiques du message, le terminal le mieux adapté la réception et la restitution du message.**

Selon un mode de réalisation de l'invention, ce procédé comprend en outre, pour chaque message reçu pour un utilisateur abonné, une étape de notification à l'utilisateur abonné de la réception d'un message dont il est le destinataire, un message étant transmis à un utilisateur abonné sur requête de l'utilisateur abonné ayant reçu une notification de réception du message.

Selon un autre mode de réalisation de l'invention, ce procédé comprend en outre des étapes de connexion d'un terminal d'utilisateur abonné à un serveur de caractéristiques par l'intermédiaire du réseau, et de transmission par le terminal au serveur de caractéristiques d'informations permettant d'adapter la restitution et/ou délivrance des messages qui lui sont destinés.

Selon encore un autre mode de réalisation de l'invention, les caractéristiques correspondant à l'utilisateur abonné comprennent des caractéristiques de terminaux et de connexions respectives de ces terminaux aux réseaux, le choix des moyens de délivrance et de restitution du message consistant à choisir parmi des terminaux accessibles de l'utilisateur destinataire du message, en fonction des caractéristiques de ces terminaux et de leur connexion à un réseau et des caractéristiques du message, le terminal le mieux adapté à la réception et la restitution du message.

Selon encore un autre mode de réalisation de l'invention, les caractéristiques correspondant à l'utilisateur abonné comprennent des préférences de l'utilisateur en ce qui concerne la délivrance et la restitution de messages, le choix des moyens de délivrance et de restitution du message consistant à choisir parmi des terminaux accessibles de l'utilisateur destinataire du message, en fonction des caractéristiques du message, le terminal correspondant aux préférences de l'utilisateur.

Selon encore un autre mode de réalisation de l'invention, les caractéristiques correspondant à l'utilisateur abonné comprennent des caractéristiques de services d'accès et/ou de restitution de contenu de messages, disponibles à partir de terminaux accessibles par un réseau, le choix des moyens de délivrance et de restitution du message consistant à choisir parmi des terminaux accessibles de l'utilisateur destinataire du message et parmi les services d'accès et/ou de restitution disponibles, en fonction des caractéristiques des services d'accès et/ou de restitution disponibles et des caractéristiques du message, le service d'accès et/ou de restitution le mieux adapté à la réception et la restitution du message, le procédé comprenant en outre une étape de paramétrage du service d'accès et/ou de restitution choisi sur le terminal où le service est disponible.

Selon encore un autre mode de réalisation de l'invention, ce procédé comprend en outre une étape d'accès à un service tiers par l'intermédiaire d'un réseau.

Selon encore un autre mode de réalisation de l'invention, ce procédé comprend en outre des étapes consistant à :
- vérifier en fonction des préférences de l'utilisateur destinataire du message que l'utilisateur destinataire est disponible vis-à-vis de l'utilisateur émetteur du message,
- déterminer en fonction du type de message, les terminaux de l'utilisateur destinataire du message qui sont accessibles et utilisables pour la restitution du message, et
- pour chaque terminal utilisable, déterminer des services d'accès et/ou de restitution disponibles permettant de délivrer et restituer le message, en fonction des caractéristiques du terminal et des services disponibles.

L'invention concerne également un système d'adaptation d'un service de messagerie électronique accessible à l'aide de terminaux d'utilisateurs susceptibles d'être connectés à au moins un réseau de transmission de données.

Selon l'invention, ce système comprend au moins un serveur d'adaptation connecté au réseau et comportant :
- des moyens pour interroger des boîtes de réception d'un ensemble d'utilisateurs abonnés, et pour collecter les messages reçus insérés dans celles-ci,
- des moyens pour analyser le contenu de chacun des messages collectés,
- des moyens pour rechercher des caractéristiques correspondant à un utilisateur abonné, destinataire d'un message,
- des moyens pour sélectionner des moyens de délivrance et de restitution d'un message, adaptés aux caractéristiques trouvées de l'utilisateur destinataire du message, en fonction de l'analyse du contenu du message, et
- des moyens pour transmettre un message reçu à l'utilisateur abonné destinataire en tenant compte des moyens de délivrance et de restitution sélectionnés.

**Les caractéristiques correspondant à l'utilisateur abonné comprennent des caractéristiques de terminaux et de connexions respectives de ces terminaux réseaux, le choix des moyens de délivrance et restitution du message consistant à choisir parmi des terminaux accessibles de l'utilisateur destinataire du message, en fonction des caractéristiques de ces terminaux et de leur connexion à un réseau et des caractéristiques du message, le terminal le mieux adapté à la réception et la restitution du message.**

Selon un mode de réalisation de l'invention, ce système comprend au moins un serveur de caractéristiques connecté au réseau et comportant des moyens pour recevoir d'un terminal d'utilisateur abonné connecté au réseau des caractéristiques correspondant à l'utilisateur abonné, des moyens pour stocker ces caractéristiques, et des moyens pour fournir sur requête au serveur d'adaptation les caractéristiques d'un utilisateur abonné particulier.

Selon un autre mode de réalisation de l'invention, les caractéristiques correspondant à l'utilisateur abonné comprennent des caractéristiques de terminaux et de connexions respectives de ces terminaux aux réseaux, les moyens de sélection étant conçus pour choisir parmi des terminaux accessibles de l'utilisateur destinataire du message, en fonction des caractéristiques de ces terminaux et de leur connexion à un réseau et des caractéristiques du message, le terminal le mieux adapté à la réception et la restitution du message.

Selon encore un autre mode de réalisation de l'invention, le serveur d'adaptation comprend en outre des moyens pour transmettre une notification de réception de message à un utilisateur abonné de la réception d'un message dont il est le destinataire, le message étant transmis à un utilisateur abonné sur requête de l'utilisateur abonné ayant reçu une notification de réception du message, la notification de réception indiquant le terminal sélectionné pour recevoir le message.

Selon encore un autre mode de réalisation de l'invention, les caractéristiques correspondant à l'utilisateur abonné comprennent des préférences de l'utilisateur en ce qui concerne la délivrance et la restitution de messages, les moyens de sélection étant conçus pour choisir parmi des terminaux accessibles de l'utilisateur destinataire du message, en fonction des caractéristiques du message, le terminal correspondant aux préférences de l'utilisateur.

Selon encore un autre mode de réalisation de l'invention, les caractéristiques correspondant à l'utilisateur abonné comprennent des caractéristiques de services d'accès et/ou de restitution de contenu de messages, disponibles à partir de terminaux accessibles par un réseau, les moyens de sélection étant conçus pour choisir parmi des terminaux accessibles de l'utilisateur destinataire du message et parmi les services d'accès et/ou de restitution disponibles, en fonction des caractéristiques des services d'accès et/ou de restitution disponibles et des caractéristiques du message, le service d'accès et/ou de restitution le mieux adapté à la réception et la restitution du message, le serveur d'adaptation comprenant en outre des moyens pour paramétrer le service d'accès et/ou de restitution choisi sur le terminal où le service est disponible.

Selon encore un autre mode de réalisation de l'invention, le serveur d'adaptation comprend en outre des moyens pour sélectionner un service tiers accessible par un réseau à mettre en oeuvre pour restituer un message.

Selon encore un autre mode de réalisation de l'invention, la notification de réception de message indique des références de service d'accès et/ou de restitution à utiliser pour restituer le message et des paramètres à appliquer au service d'accès et/ou de restitution.

Selon encore un autre mode de réalisation de l'invention, ce système comprend en outre un serveur d'arbitrage comprenant :
- des moyens pour vérifier en fonction des préférences de l'utilisateur destinataire du message que l'utilisateur destinataire est disponible vis-à-vis de l'utilisateur émetteur du message,
- des moyens pour déterminer en fonction du type de message, les terminaux de l'utilisateur destinataire du message qui sont accessibles et utilisables pour la restitution du message, et
- des moyens pour déterminer pour chaque terminal utilisable, des services d'accès et/ou de restitution disponibles permettant de délivrer et restituer le message, en fonction des caractéristiques du terminal et des services disponibles.

Un mode de réalisation préféré de l'invention sera décrit ci-après, à titre d'exemple non limitatif, avec référence aux dessins annexés dans lesquels :
La figure 1 illustre la procédure de transmission d'un message par un système de messagerie électronique, selon l'art antérieur ;
La figure 2 représente schématiquement un système de messagerie électronique selon l'invention ;
La figure 3 illustre sous la forme d'un organigramme les différentes étapes du procédé selon l'invention ;
La figure 4 illustre sous la forme d'un organigramme une procédure de connexion d'un terminal d'utilisateur qui est exécutée dans le cadre du procédé selon l'invention ;
La figure 5 illustre sous la forme d'un organigramme des étapes d'adaptation de service de restitution de contenu, selon une variante du procédé selon l'invention ;
La figure 6 illustre sous la forme d'un organigramme des étapes de choix d'adaptation du service de messagerie, selon une variante du procédé selon l'invention.

La figure 2 représente un système de messagerie électronique comprenant d'une manière classique, un serveur d'émission 5 de messages couplé à une zone de stockage 6 de messages à envoyer. Le serveur d'émission 5 est accessible par l'intermédiaire de réseaux de télécommunications 10, à des terminaux d'utilisateurs 11 disposant notamment d'une application cliente de connexion aux réseaux 10 et d'une application cliente de messagerie électronique.

Les messages mémorisés dans la zone de stockage 6 sont transmis en tenant compte de leur ordre de réception et de leur degré d'urgence, via les réseaux 10 aux serveurs de réception 7 des utilisateurs destinataires des messages, les serveurs de réception plaçant les messages reçus dans les boîtes de réception 8 respectives des utilisateurs destinataires.

Les réseaux 10 peuvent comprendre des réseaux publics tels que le réseau Internet et des réseaux de télécommunications mobiles ou fixes, et des réseaux privés tels que des réseaux Intranet.

Selon l'invention, ce système comprend en outre au moins un serveur d'adaptation 3 conçu pour collecter les messages insérés dans les boîtes de réception respectives d'un ensemble d'utilisateurs abonnés au service d'adaptation, pour les mémoriser dans des boîtes de réception respectives 4 en remplacement des boîtes de réception 8, et pour adapter leur délivrance à l'utilisateur destinataire respectif. A cet effet, ce système comprend en outre au moins un serveur 1 de stockage de caractéristiques conçu pour collecter et mémoriser dans une zone de stockage 2, des informations relatives aux utilisateurs, sur la base desquelles cette adaptation est effectuée.

L'adaptation de la délivrance du message fait intervenir au moins l'une des fonctions d'adaptation spécialisées suivantes :
- une fonction d'adaptation de terminal et de connexion pour adapter la délivrance de messages en fonction des terminaux et des connexions au réseau dont dispose l'utilisateur,
- une fonction d'adaptation de service pour adapter la délivrance de messages en fonction de services accessibles à l'utilisateur, et
- une fonction d'adaptation de préférences pour adapter la délivrance de messages aux préférences de l'utilisateur.

Les informations nécessaires à l'adaptation de la délivrance des messages peuvent donc comprendre des caractéristiques des terminaux connectés des utilisateurs, et/ou des caractéristiques et paramètres de commande des services de restitution disponibles, et/ou les préférences des utilisateurs.

Les caractéristiques de connexion d'un utilisateur concernent les caractéristiques des terminaux connectés de l'utilisateur, à savoir notamment sont type (PC, PDA, téléphone fixe, mobile), sa marque, sa capacité de mémoire disponible, la taille éventuelle de son écran d'affichage, la présence et les caractéristiques d'éventuels moyens de restitution sonores, et les caractéristiques de connexion de chacun de ces terminaux aux réseaux 10, c'est-à-dire notamment le type de réseau d'accès (ADSL, RTC, GSM, GPRS, WiFi, ....), la capacité du réseau en terme de bande passante ou de débit de transmission disponible, et le protocole de transmission utilisé par cette connexion (IP, SS7, http, ...).

Les services accessibles d'un utilisateur sur son terminal sont par exemple des services de visualisation, de messagerie, de visioconférence, de consultation de messages vocaux, de messages SMS, des services de conversion de format d'image, des services de transcodage audio ou vidéo, des services d'accès à des réseaux particuliers tels que par exemple un kit GSM, ou un réseau de diffusion de vidéos à la demande, des services d'agenda, de carnet d'adresse, par exemple disponibles sur un PDA.

Les préférences d'un utilisateur peuvent comprendre des informations de filtrage (par exemple : "pas de publicité", "délivrer tous les messages urgents", choix d'émetteurs autorisés, de plages horaires de disponibilité), et/ou de choix d'acheminement de messages vers l'un ou l'autre des terminaux connectés de l'utilisateur, en fonction notamment de tranches horaires, de l'identité des émetteurs, du degré d'urgence et du type des messages.

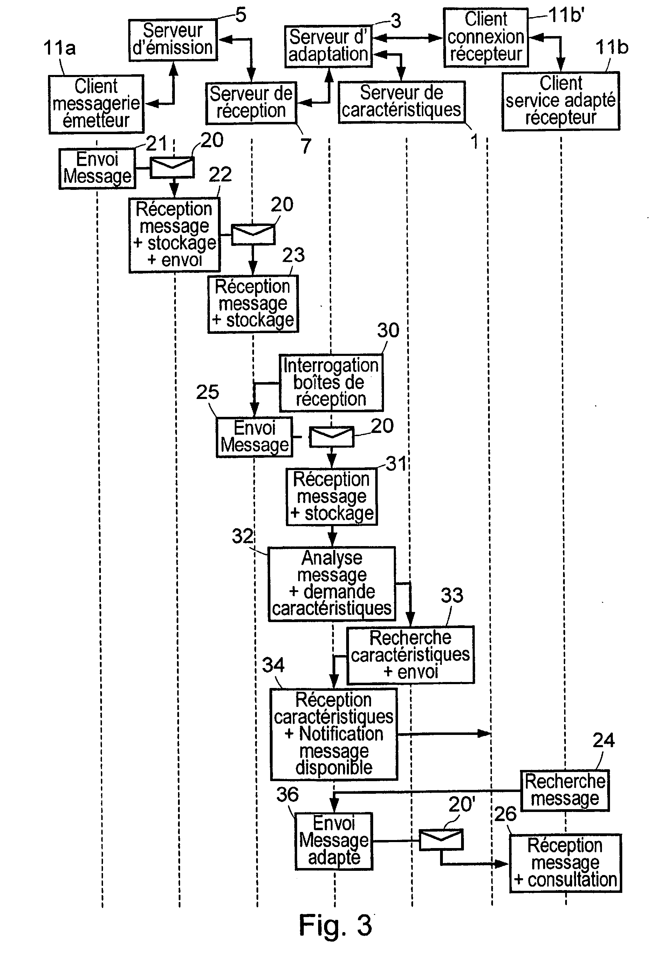

La figure 3 représente les différentes étapes qui sont exécutées dans ce système pour délivrer un message d'une manière adaptée aux moyens et/ou préférences de l'utilisateur.

D'une manière classique, un utilisateur envoie à l'issue d'une première étape 21 un message 20 à l'aide d'une application cliente de messagerie 11a installée sur son terminal. A l'étape 22 suivante, ce message est reçu et stocké par le serveur d'émission 5 qui retransmet le message au serveur de réception 7 assurant la gestion de la boîte de réception de l'utilisateur destinataire du message.

A l'étape 23 suivante, le serveur de réception 7 reçoit et place le message 20 dans la boîte de réception de l'utilisateur destinataire du message.

Parallèlement, à l'étape 30, le serveur d'adaptation 3 interroge les boîtes de réception des utilisateurs 8, lesquelles envoient en réponse les messages se trouvant dans ces boîtes (étape 25). Ces messages sont reçus par le serveur d'adaptation 3 qui les stocke à l'étape 31, dans les boîtes de réception 4 respectives.

A l'étape 32 suivante, le serveur d'adaptation 3 analyse le message et son contenu et accède au serveur de caractéristiques 1 pour demander les caractéristiques spécifiant l'environnement de l'utilisateur destinataire identifié dans le message par son adresse électronique. Ces caractéristiques concernent notamment les terminaux et/ou services dont dispose l'utilisateur, et/ou les préférences de ce dernier. Le serveur de caractéristiques 1 qui reçoit la requête du serveur d'adaptation 3 à l'étape 33, recherche les caractéristiques correspondant à l'utilisateur destinataire identifié, et les envoie en réponse au serveur d'adaptation 3.

A l'étape 34, ces caractéristiques sont reçues et exploitées par le serveur d'adaptation 3 pour sélectionner en fonction de la nature et du contenu du message 20, le meilleur service à mettre en oeuvre, et/ou le meilleur terminal vers lequel délivrer le message. Ensuite, le serveur d'adaptation notifie à l'application cliente de connexion 11b' de l'utilisateur destinataire, exécutée par un terminal éventuellement sélectionné, qu'un nouveau message 20 est disponible.

L'utilisateur est ainsi incité à lancer une consultation de sa boîte de réception à l'aide d'une application cliente de messagerie 11b éventuellement adaptée, sur un terminal éventuellement adapté et en faisant appel à un service éventuellement adapté. D'une manière classique, sur déclenchement de l'utilisateur destinataire, l'application cliente 11b interroge alors la boîte de réception de l'utilisateur destinataire (étape 24) et le serveur d'adaptation 3 transmet en réponse (étape 36) les éventuels messages 20 stockés dans la boîte de réception, l'application cliente 11b recevant ces messages et les restituant à l'utilisateur à l'étape 26, éventuellement conformément aux préférences de l'utilisateur, et éventuellement à l'aide du service adapté.

Le serveur d'adaptation et le serveur de caractéristiques peuvent être conçus pour adapter l'environnement et les conditions de restitution d'un message uniquement en choisissant l'un des terminaux de l'utilisateur accessibles à l'instant de réception du message, ou bien uniquement en choisissant l'un des services disponibles, adapté à la restitution du contenu du message, ou bien uniquement en fonction de préférences de l'utilisateur, ou bien encore à toute combinaison de ces adaptations.

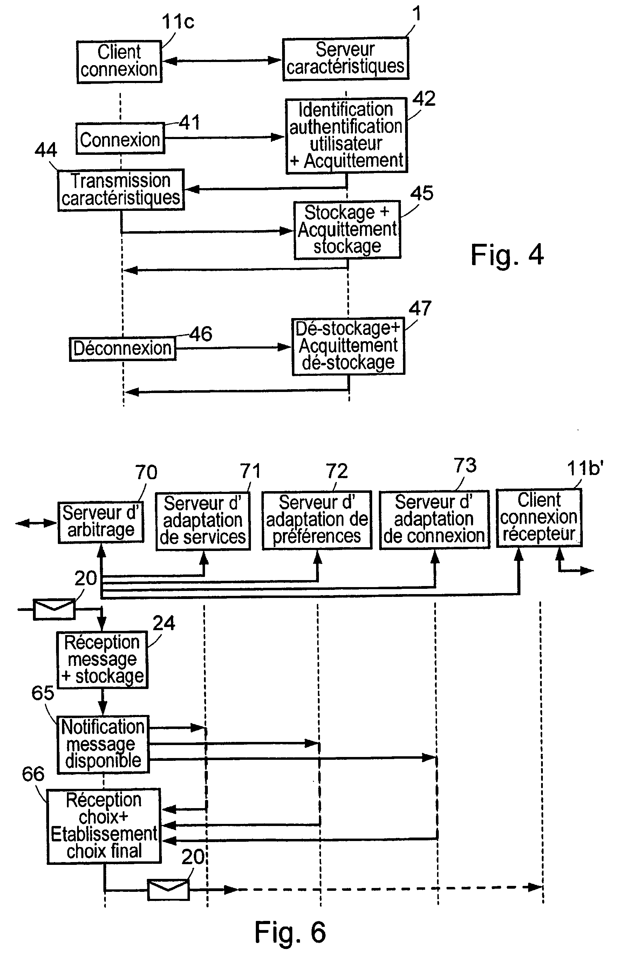

L'organigramme représenté sur la figure 4 illustre une procédure permettant au serveur de caractéristiques 1 d'avoir accès aux préférences des utilisateurs abonnés et/ou aux informations relatives aux terminaux ou connexions en cours de ceux-ci, et/ou aux services de restitution d'informations accessibles à ces terminaux.

Cette procédure est avantageusement intégrée à l'application de connexion 11c au réseau 10, installée sur le terminal de l'utilisateur destinataire.

A la première étape 41 de cette procédure, l'application de connexion 11c de l'utilisateur abonné accède au serveur de caractéristiques 1 en lui fournissant des informations d'identification et d'authentification. A l'étape suivante 42, le serveur de caractéristiques identifie et authentifie l'utilisateur à l'aide des informations reçues et émet un acquittement selon le résultat de l'authentification de l'utilisateur. Si l'authentification de l'utilisateur a réussi, l'application de connexion 11c transmet en réponse à l'étape 44 des informations caractéristiques relatives à l'environnement de connexion de l'utilisateur, et/ou à l'environnement de services de l'utilisateur, et/ou aux préférences de l'utilisateur. Ces informations sont reçues et stockées par le serveur de caractéristiques à l'étape 45.

Ces informations caractéristiques sont donc mémorisées par chaque terminal d'utilisateur abonné. On peut prévoir que le terminal est équipé d'une application de mise à jour de ces informations qui peut être manuelle ou automatique dans le cas des informations relatives aux services, au terminal et à la connexion.

Lorsque l'application de connexion 11c de l'utilisateur exécute la procédure de déconnexion 46 du terminal 11 du réseau 10, celle-ci notifie au serveur de caractéristiques 1 que le terminal se déconnecte. A la réception de cette notification, le serveur de caractéristiques 1 efface de sa zone de stockage 2 les caractéristiques mémorisées pour l'utilisateur identifié dans la notification de déconnexion, et éventuellement, transmet en réponse un acquittement à l'application de connexion 11c du terminal (étape 47).

Par ailleurs, le serveur de caractéristiques 1 surveille l'état des connexions en cours, et si un terminal est détecté déconnecté, le serveur de caractéristiques efface les informations mémorisées pour le terminal détecté déconnecté.

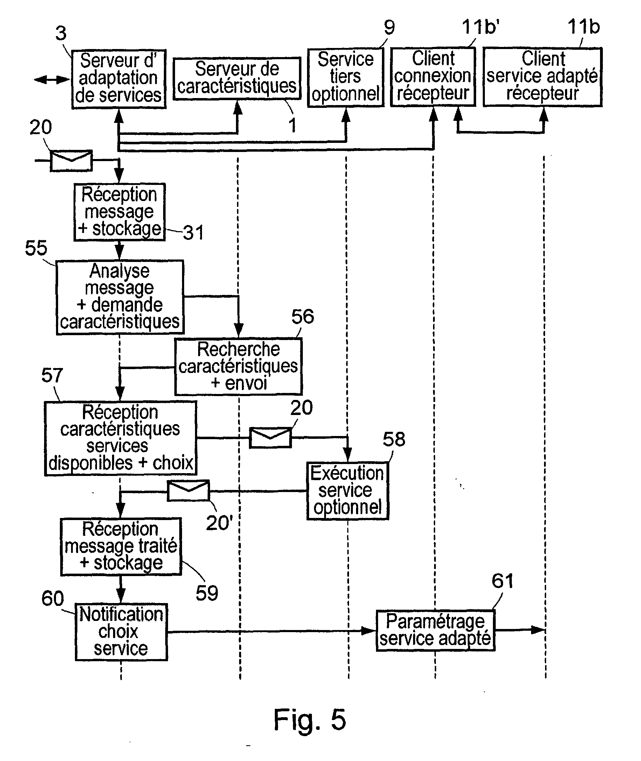

Les adaptations effectuées en fonction des terminaux ou connexions accessibles à l'utilisateur destinataire ou en fonction des préférences de celui-ci, sont réalisées conformément à l'organigramme illustré sur la figure 3.
L'adaptation de service est effectuée de préférence conformément à l'organigramme illustré sur la figure 5.

Sur cette figure, le serveur d'adaptation de service 3 reçoit un message 20 à l'étape 31 comme précédemment décrit en référence à la figure 3. A l'étape 55 suivante, il analyse ce message en ce qui concerne notamment sa taille, le type de son contenu, et son degré d'urgence, et interroge le serveur de caractéristiques 1 pour connaître la liste et les caractéristiques des services accessibles au destinataire du message. A l'étape 56 suivante, le serveur de caractéristiques traite la requête reçue du serveur d'adaptation 3 et transmet en réponse à cette requête les informations demandées. A l'étape 57 suivante, le serveur d'adaptation 3 reçoit ces informations concernant les services disponibles du destinataire du message, et choisit le meilleur service à utiliser pour restituer le contenu du message en fonction du résultat de l'analyse effectuée à l'étape 55. Durant l'étape 57, le serveur d'adaptation 3 peut décider de faire appel à un service tiers 9 optionnel, accessible par les réseaux 10 pour traiter le message afin de le rendre restituable par l'un des services accessibles à l'utilisateur destinataire. Un tel service tiers peut être un service de transcodage de format, par exemple texte/vocal.

Si le serveur d'adaptation décide de faire appel à un service tiers 9, le message 20 est préalablement transmis au service tiers 9 qui traite le message et renvoie en réponse le message traité 20' au serveur d'adaptation. Ce message est reçu et stocké à l'étape 59 par le serveur d'adaptation en remplacement du message initialement reçu. Ensuite, le serveur d'adaptation exécute l'étape 60 au cours de laquelle le serveur d'adaptation notifie le choix du service à utiliser pour restituer le message, à l'application cliente de connexion 11b' de l'utilisateur destinataire du message. Ce message de notification peut également comprendre des valeurs de paramètres de configuration à appliquer au service choisi.

Si le serveur d'adaptation estime qu'il n'est pas nécessaire de faire appel à un service tiers, il passe directement l'étape 60.

A la réception de ce message de notification à l'étape suivante 61, l'application cliente de connexion 11b' applique les paramètres reçus au service spécifié. La procédure se poursuit ensuite par les étapes 24, 36, puis 26, précédemment décrites en référence à la figure 3.

Si on applique à la délivrance des messages au moins deux des adaptations précédemment décrites, à savoir l'adaptation à des préférences, l'adaptation de connexion et de terminal et l'adaptation de service, le système selon l'invention comprend également une fonction d'arbitrage d'adaptation qui gère la réception et le stockage des messages 20 et l'appel des fonctions spécialisées d'adaptation de service, de terminal et de connexion, et à des préférences d'utilisateur, conformément aux procédures décrites précédemment en référence à la figure 3 et/ou 5. Ces fonctions peuvent être réparties sur des serveurs distincts connectés à un serveur d'arbitrage 70 qui gère la réception et le stockage des messages 20 et leur diffusion vers un ou plusieurs des serveurs d'adaptation spécialisés 71, 72, 73, pour effectuer respectivement une adaptation de service, de terminal et de connexion, et à des préférences d'utilisateur.

Dans ce système, le serveur d'arbitrage 70 exécute la procédure illustrée sur la figure 6. Sur cette figure, le serveur d'arbitrage 70 exécute l'étape 24 précédemment décrite de réception et de stockage d'un message reçu. Puis il exécute une étape 65 de notification du message reçu aux serveurs d'adaptation 71, 72, 73.
A la réception d'une telle notification, chaque serveur d'adaptation exécute les étapes 32 à 34 ou éventuellement 55 à 57 pour le serveur d'adaptation de services 71. Les choix effectués par chacun des serveurs d'adaptation 71 à 73 sont ensuite notifiés au serveur d'arbitrage 70.

A la réception de tous les choix effectués par les serveurs d'adaptation 71 à 73, le serveur d'arbitrage 70 établit à l'étape 66 un choix final à partir des choix reçus des serveurs d'adaptation.
Le choix final peut être établi en vérifiant tout d'abord que l'utilisateur émetteur du message est bien autorisé par le destinataire et est disponible pour ce dernier. Puis ce choix consiste à établir la liste des terminaux utilisables pour délivrer le message, selon le type du message et les préférences de l'utilisateur.
Ensuite, ce choix consiste pour chaque terminal utilisable à déterminer les services disponibles capables de délivrer le message dans de bonnes conditions, en tenant compte des capacités du terminal et de sa connexion au réseau, et des contraintes techniques nécessaires à la mise en oeuvre du service (par exemple un service de visioconférence tel que NetMeeting (marque déposée par Microsoft) nécessite un terminal avec un écran d'affichage, un microphone, un haut-parleur et une caméra).

Enfin, ce choix consiste à déterminer s'il est nécessaire de faire appel à un service tiers 9 accessible par le réseau, en fonction du choix final retenu. Si tel est le cas, il déclenche les étapes 58 et 59. Dans tous les cas, il notifie à l'application cliente de connexion 11b' la réception d'un message, en fournissant le choix final (terminal et connexion à utiliser pour la délivrance du message), la référence du service choisi, et le cas échéant, des valeurs de paramétrage de celui-ci.

Dans cette variante de l'invention, la fonction de serveur de caractéristiques 1 peut être répartie sur trois serveurs spécialisés, à savoir un serveur de caractéristiques de connexion, un serveur de caractéristiques de services et un serveur de caractéristiques de préférences d'utilisateurs.

## Revendications

1. Procédé d'adaptation d'un service de messagerie électronique accessible par l'intermédiaire de terminaux d'utilisateurs (11) susceptibles d'être connectés à au moins un réseau de transmission de données (10), comprenant des étapes consistant à :
- transmettre (21) un message d'un terminal d'utilisateur émetteur vers un utilisateur destinataire,
- recevoir (22) le message par un serveur d'émission (5) auquel le terminal d'utilisateur émetteur est connecté par l'intermédiaire du réseau de transmission de données, et
- transmettre (23) le message par l'intermédiaire du réseau de transmission de données, du serveur d'émission vers un serveur de réception (7) de l'utilisateur destinataire, et stocker le message dans une boîte de réception (8) de l'utilisateur destinataire,
et qui comprend en outre des étapes consistant à :
- interroger (30) les boîtes de réception (8) d'un ensemble d'utilisateurs abonnés pour collecter (31) les messages reçus, insérés dans celles-ci, et
- pour chacun des messages reçus pour un utilisateur abonné, analyser (32) le contenu du message, rechercher (33) des caractéristiques correspondant à l'utilisateur abonné, sélectionner (34) des moyens de délivrance et de restitution du message adaptés aux caractéristiques trouvées, et transmettre (36) le message à l'utilisateur abonné en tenant compte des moyens de délivrance et de restitution sélectionnés;
**et dans lequel les caractéristiques correspondant à l'utilisateur abonné comprennent des caractéristiques de terminaux (11) et de connexions respectives de ces terminaux réseaux (10), le choix (34) des moyens de délivrance et restitution du message consistant à choisir parmi des terminaux accessibles de l'utilisateur destinataire du message, en fonctions des caractéristiques de ces terminaux et de leur connexion à un réseau et des caractéristiques du message, le terminal le mieux adapté à la réception et à la restitution du message.**

2. Procédé selon la revendication 1,
**caractérisé en ce qu'**il comprend en outre, pour chaque message reçu pour un utilisateur abonné, une étape de notification (34) à l'utilisateur abonné de la réception d'un message dont il est le destinataire, un message étant transmis (36) à un utilisateur abonné sur requête de l'utilisateur abonné ayant reçu une notification de réception du message.

3. Procédé selon la revendication 1 ou 2,
**caractérisé en ce qu'**il comprend en outre des étapes de connexion (41) d'un terminal d'utilisateur abonné (11) à un serveur de caractéristiques (1) par l'intermédiaire du réseau (10), et de transmission (44) par le terminal au serveur de caractéristiques d'informations permettant d'adapter la restitution et/ou délivrance des messages qui lui sont destinés.

4. Procédé selon l'une des revendications 1 à 3,
**caractérisé en ce que** les caractéristiques correspondant à l'utilisateur abonné comprennent des préférences de l'utilisateur en ce qui concerne la délivrance et la restitution de messages, le choix (34) des moyens de délivrance et de restitution du message consistant à choisir parmi des terminaux accessibles de l'utilisateur destinataire du message, en fonction des caractéristiques du message, le terminal correspondant aux préférences de l'utilisateur.

5. Procédé selon l'une des revendications 1 à 4,
**caractérisé en ce que** les caractéristiques correspondant à l'utilisateur abonné comprennent des caractéristiques de services d'accès et/ou de restitution de contenu de messages, disponibles à partir de terminaux accessibles par un réseau (10), le choix (34) des moyens de délivrance et de restitution du message consistant à choisir parmi des terminaux accessibles de l'utilisateur destinataire du message et parmi les services d'accès et/ou de restitution disponibles, en fonction des caractéristiques des services d'accès et/ou de restitution disponibles et des caractéristiques du message, le service d'accès et/ou de restitution le mieux adapté à la réception et la restitution du message, le procédé comprenant en outre une étape de paramétrage du service d'accès et/ou de restitution choisi sur le terminal où le service est disponible.

6. Procédé selon la revendication 5,
**caractérisé en ce qu'**il comprend en outre une étape d'accès à un service tiers (9) par l'intermédiaire d'un réseau (10).

7. Procédé selon l'une des revendications 4 à 6,
**caractérisé en ce qu'**il comprend en outre des étapes consistant à :
- vérifier en fonction des préférences de l'utilisateur destinataire du message que l'utilisateur destinataire est disponible vis-à-vis de l'utilisateur émetteur du message,
- déterminer en fonction du type de message, les terminaux de l'utilisateur destinataire du message qui sont accessibles et utilisables pour la restitution du message, et
- pour chaque terminal utilisable, déterminer des services d'accès et/ou de restitution disponibles permettant de délivrer et restituer le message, en fonction des caractéristiques du terminal et des services disponibles.

8. Système d'adaptation d'un service de messagerie électronique accessible à l'aide de terminaux d'utilisateurs (11) susceptibles d'être connectés à au moins un réseau de transmission de données (10),
qui comprend au moins un serveur d'adaptation (3) connecté au réseau (10) et comportant :
- des moyens pour interroger des boîtes de réception (8) d'un ensemble d'utilisateurs abonnés, et pour collecter les messages reçus insérés dans celles-ci,
- des moyens pour analyser le contenu de chacun des messages collectés,
- des moyens pour rechercher des caractéristiques correspondant à un utilisateur abonné, destinataire d'un message,
- des moyens pour sélectionner des moyens de délivrance et de restitution d'un message, adaptés aux caractéristiques trouvées de l'utilisateur destinataire du message, en fonction de l'analyse du contenu du message, et
- des moyens pour transmettre un message reçu à l'utilisateur abonné destinataire en tenant compte des moyens de délivrance et de restitution sélectionnés;
**et dans lequel les caractéristiques correspondant à l'utilisateur abonné comprennent des caractéristiques de terminaux (11) et de connexions respectives de ces terminaux aux réseaux (10), les moyens de sélection étant conçus pour choisir parmi des terminaux accessibles de l'utilisateur destinataire du message, en fonction des caractéristiques de ces terminaux et de leur connexion à un réseau et des caractéristiques du message, le terminal le mieux adapté à la réception et à la restitution du message.**

9. Système selon la revendication 8,
**caractérisé en ce qu'**il comprend au moins un serveur de caractéristiques (1) connecté au réseau (10) et comportant des moyens pour recevoir d'un terminal d'utilisateur abonné connecté au réseau des caractéristiques correspondant à l'utilisateur abonné, des moyens (2) pour stocker ces caractéristiques, et des moyens pour fournir sur requête au serveur d'adaptation (3) les caractéristiques d'un utilisateur abonné particulier.

10. Système selon la revendication 8 ou 9,
**caractérisé en ce que** le serveur d'adaptation (3) comprend en outre des moyens pour transmettre une notification de réception de message à un utilisateur abonné de la réception d'un message dont il est le destinataire, le message étant transmis (36) à un utilisateur abonné sur requête de l'utilisateur abonné ayant reçu une notification de réception du message, la notification de réception indiquant le terminal sélectionné pour recevoir le message.

11. Système selon l'une des revendications 8 à 10,
**caractérisé en ce que** les caractéristiques correspondant à l'utilisateur abonné comprennent des préférences de l'utilisateur en ce qui concerne la délivrance et la restitution de messages, les moyens de sélection étant conçus pour choisir parmi des terminaux accessibles de l'utilisateur destinataire du message, en fonction des caractéristiques du message, le terminal correspondant aux préférences de l'utilisateur.

12. Système selon l'une des revendications 8 à 11,
**caractérisé en ce que** les caractéristiques correspondant à l'utilisateur abonné comprennent des caractéristiques de services d'accès et/ou de restitution de contenu de messages, disponibles à partir de terminaux accessibles par un réseau (10), les moyens de sélection étant conçus pour choisir parmi des terminaux accessibles de l'utilisateur destinataire du message et parmi les services d'accès et/ou de restitution disponibles, en fonction des caractéristiques des services d'accès et/ou de restitution disponibles et des caractéristiques du message, le service d'accès et/ou de restitution le mieux adapté à la réception et la restitution du message, le serveur d'adaptation (3) comprenant en outre des moyens pour paramétrer le service d'accès et/ou de restitution choisi sur le terminal où le service est disponible.

13. Système selon la revendication 12,
**caractérisé en ce que** le serveur d'adaptation (3) comprend en outre des moyens pour sélectionner un service tiers (9) accessible par un réseau (10) à mettre en oeuvre pour restituer un message.

14. Système selon la revendication 12 ou 13,
**caractérisé en ce que** la notification de réception de message indique des références de service d'accès et/ou de restitution à utiliser pour restituer le message et des paramètres à appliquer au service d'accès et/ou de restitution.

15. Système selon l'une des revendications 11 à 14,
**caractérisé en ce qu'**il comprend en outre un serveur d'arbitrage (70) comprenant :
- des moyens pour vérifier en fonction des préférences de l'utilisateur destinataire du message que l'utilisateur destinataire est disponible vis-à-vis de l'utilisateur émetteur du message,
- des moyens pour déterminer en fonction du type de message, les terminaux de l'utilisateur destinataire du message qui sont accessibles et utilisables pour la restitution du message, et
des moyens pour déterminer pour chaque terminal utilisable, des services d'accès et/ou de restitution disponibles permettant de délivrer et restituer le message, en fonction des caractéristiques du terminal et des services disponibles.

## Claims

1. Method for adapting an electronic message service accessible by way of user terminals (11) apt to be connected to at least one data transmission network (10), comprising steps consisting in:
- transmitting (21) a message from a sender user terminal to a destination user,
- receiving (22) the message by a sending server (5) to which the sender user terminal is connected by way of the data transmission network, and
- transmitting (23) the message by way of the data transmission network, from the sending server to a receiving server (7) of the destination user, and storing the message in a reception box (8) of the destination user,
and which furthermore comprises steps consisting in:
- interrogating (30) the reception boxes (8) of a set of subscriber users so as to collect (31) the messages received, inserted into the boxes, and
- for each of the messages received for a subscriber user, analyzing (32) the content of the message, searching (33) for the characteristics corresponding to the subscriber user, selecting (34) message delivery and retrieval means adapted to the characteristics found, and transmitting (36) the message to the subscriber user taking account of the delivery and retrieval means selected;
and in which the characteristics corresponding to the subscriber user comprise characteristics of terminals (11) and of respective connections of these network terminals (10), the choice (34) of the message delivery and retrieval means consisting in choosing from among accessible terminals of the message destination user, as a function of the characteristics of these terminals and of their connection to a network and of the characteristics of the message, the terminal best adapted to the reception and to the retrieval of the message.

2. Method according to Claim 1,
**characterized in that** it further comprises, for each message received for a subscriber user, a step of notification (34) to the subscriber user of the receipt of a message of which he is the recipient, a message being transmitted (36) to a subscriber user on request of the subscriber user having received a notification of receipt of the message.

3. Method according to Claim 1 or 2,
**characterized in that** it furthermore comprises steps of connection (41) of a subscriber user terminal (11) to a server of characteristics (1) by way of the network (10), and of transmission (44) by the terminal to the server of characteristics of information making it possible to adapt the retrieval and/or delivery of the messages which are destined therefor.

4. Method according to one of Claims 1 to 3,
**characterized in that** the characteristics corresponding to the subscriber user comprise preferences of the user as regards the delivery and the retrieval of messages, the choice (34) of the message delivery and retrieval means consisting in choosing from among accessible terminals of the destination user of the message, as a function of the characteristics of the message, the terminal corresponding to the preferences of the user.

5. Method according to one of Claims 1 to 4,
**characterized in that** the characteristics corresponding to the subscriber user comprise characteristics of services of access and/or of retrieval of content of messages, available on the basis of terminals accessible by a network (10), the choice (34) of the message delivery and retrieval means consisting in choosing from among accessible terminals of the message destination user and from among the access and/or retrieval services available, as a function of the characteristics of the access and/or retrieval services available and of the characteristics of the message, the access and/or retrieval service best adapted to the reception and the retrieval of the message, the method furthermore comprising a step parameterizing the access and/or retrieval service chosen on the terminal where the service is available.

6. Method according to Claim 5,
**characterized in that** it furthermore comprises a step of access to a third-party service (9) by way of a network (10).

7. Method according to one of claims 4 to 6,
**characterized in that** it further comprises steps consisting in:
- verifying as a function of the preferences of the destination user of the message that the destination user is available vis-à-vis the message sender user,
- determining as a function of the type of message, the terminals of the message destination user which are accessible and usable for the retrieval of the message, and
- for each usable terminal, determining access and/or retrieval services available making it possible to deliver and retrieve the message, as a function of the characteristics of the terminal and of the services available.

8. System for adapting an electronic message service accessible with the aid of user terminals (11) apt to be connected to at least one data transmission network (10),
which comprises at least one adaptation server (3) connected to the network (10) and comprising:
- means for interrogating reception boxes (8) of a set of subscriber users, and for collecting the messages received inserted into said boxes,
- means for analyzing the content of each of the messages collected,
- means for searching for the characteristics corresponding to a subscriber user, the recipient of a message,
- means for selecting message delivery and retrieval means, adapted to the characteristics found of the destination user of the message, as a function of the analysis of the content of the message, and
- means for transmitting a message received to the destination subscriber user taking account of the delivery and retrieval means selected;
and in which the characteristics corresponding to the subscriber user comprise characteristics of terminals (11) and of respective connections of these network terminals (10), the selection of the message delivery and retrieval means consisting in choosing from among accessible terminals of the message destination user, as a function of the characteristics of these terminals and of their connection to a network and of the characteristics of the message, the terminal best adapted to the reception and to the retrieval of the message.

9. System according to claim 8
**characterized in that** it comprises at least one server of characteristics (1) connected to the network (10) and comprising means for receiving from a subscriber user terminal connected to the network characteristics corresponding to the subscriber user, means (2) for storing these characteristics, and means for providing on request to the adaptation server (3) the characteristics of a particular subscriber user.

10. System according to claim 8 or 9,
**characterized in that** the adaptation server (3) furthermore comprises means for transmitting a notification of receipt of message to a subscriber user of the receipt of a message of which he is the recipient, the message being transmitted (36) to a subscriber user on request of the subscriber user having received a notification of reception of the message, the notification of receipt indicating the terminal selected to receive the message.

11. System according to one of Claims 8 to 10,
**characterized in that** the characteristics corresponding to the subscriber user comprise preferences of the user as regards the delivery and the retrieval of messages, the selection means consisting in choosing from among accessible terminals of the destination user of the message, as a function of the characteristics of the message, the terminal corresponding to the preferences of the user.

12. System according to one of Claims 8 to 11,
**characterized in that** the characteristics corresponding to the subscriber user comprise characteristics of services of access and/or of retrieval of content of messages, available on the basis of terminals accessible by a network (10), the selection means consisting in choosing from among accessible terminals of the message destination user and from among the access and/or retrieval services available, as a function of the characteristics of the access and/or retrieval services available and of the characteristics of the message, the access and/or retrieval service best adapted to the reception and the retrieval of the message, the adaptation server (3) furthermore comprising means of parameterizing the access and/or retrieval service chosen on the terminal where the service is available.

13. System according to Claim 12,
**characterized in that** the adaptation server (3) furthermore comprises means for selecting a third-party service (9) accessible by a network (10) to be implemented in order to retrieve a message.

14. System according to Claim 12 to 13,
**characterized in that** the notification of reception of message indicates references of access and/or retrieval service to be used to retrieve the message and parameters to be applied to the access and/or retrieval service.

15. System according to one of Claims 11 to 14,
**characterized in that** it furthermore comprises an arbitration server (70) comprising:
- means for verifying as a function of the preferences of the message destination user that the destination user is available vis a vis the message sender user,
- means for determining as a function of the type of message, the terminals of the message destination user which are accessible and usable for the retrieval of the message, and
means for determining for each usable terminal, access and/or retrieval services available making it possible to deliver and retrieve the message, as a function of the characteristics of the terminal and of the services available.

## Patentansprüche

1. Verfahren zum Anpassen eines elektronischen Nachrichtendienstes, der über Benutzerstationen (11) zugänglich ist, die an mindestens ein Datenübertragungsnetz (10) angeschlossen werden können, welches Schritte aufweist, die darin bestehen:
- eine Nachricht von einer sendenden Benutzerstation zu einem Zielbenutzer zu senden (21),
- die Nachricht mit einem Sendeserver (5), an den die sendende Benutzerstation angeschlossen ist, über das Datenübertragungsnetz zu empfangen (22), und
- die Nachricht über das Datenübertragungsnetz von dem Sendeserver zu einem Empfangsserver (7) des Zielbenutzers zu senden (23) und die Nachricht in einer Empfangsbox (8) des Zielbenutzers zu speichern,
und welches außerdem Schritte aufweist, die darin bestehen:
- die Empfangsboxen (8) einer Gesamtheit von angemeldeten Benutzern abzufragen (30), um die empfangenen Nachrichten zu sammeln (31), die in diese eingespeichert wurden, und
- für jede der Nachrichten, die für einen angemeldeten Benutzer empfangen wurden, den Inhalt der Nachricht zu analysieren (32), Merkmale zu suchen (33), die dem angemeldeten Benutzer entsprechen, Mittel zur Zustellung und Wiedergabe der Nachricht auszuwählen (34), die an die gefundenen Merkmale angepasst sind, und die Nachricht unter Berücksichtigung der ausgewählten Mittel zur Zustellung und Wiedergabe an den angemeldeten Benutzer zu senden (36);
und in welchem die Merkmale, die dem angemeldeten Benutzer entsprechen, Merkmale von Stationen (11) und von jeweiligen Anschlüssen dieser Stationen an die Netze (10) enthalten, wobei die Auswahl (34) der Mittel zur Zustellung und Wiedergabe der Nachricht darin besteht, unter den zugänglichen Stationen des Zielbenutzers der Nachricht in Abhängigkeit von den Merkmalen dieser Stationen und von ihrem Anschluss an ein Netz und von den Merkmalen der Nachricht die Station auszuwählen, die für den Empfang und für die Wiedergabe der Nachricht am besten geeignet ist.

2. Verfahren nach Anspruch 1, **dadurch gekennzeichnet, dass** es außerdem für jede Nachricht, die für einen angemeldeten Benutzer empfangen wurde, einen Schritt der Benachrichtigung (34) des angemeldeten Benutzers über den Empfang einer Nachricht, deren Empfänger er ist, aufweist, wobei eine Nachricht an einen angemeldeten Benutzer auf Anforderung des angemeldeten Benutzers, der eine Benachrichtigung über den Empfang der Nachricht empfangen hat, gesendet wird (36).

3. Verfahren nach Anspruch 1 oder 2, **dadurch gekennzeichnet, dass** es außerdem Schritte des Anschließens (41) einer Station eines angemeldeten Benutzers (11) an einen Merkmalserver (1) über das Netz (10) und des Sendens (44) von Informationen durch die Station an den Merkmalserver, die es ermöglichen, die Wiedergabe und/oder Zustellung der Nachrichten, die für ihn bestimmt sind, anzupassen, aufweist.

4. Verfahren nach einem der Ansprüche 1 bis 3, **dadurch gekennzeichnet, dass** die Merkmale, die dem angemeldeten Benutzer entsprechen, Präferenzen des Benutzers umfassen, was die Zustellung und Wiedergabe von Nachrichten anbelangt, wobei die Auswahl (34) der Mittel zur Zustellung und Wiedergabe der Nachricht darin besteht, unter den zugänglichen Stationen des Zielbenutzers der Nachricht in Abhängigkeit von den Merkmalen der Nachricht die Station auszuwählen, die den Präferenzen des Benutzers entspricht.

5. Verfahren nach einem der Ansprüche 1 bis 4, **dadurch gekennzeichnet, dass** die Merkmale, die dem angemeldeten Benutzer entsprechen, Merkmale von Diensten für den Zugriff und/oder die Wiedergabe des Inhalts von Nachrichten umfassen, die von Stationen aus verfügbar sind, die über ein Netz (10) zugänglich sind, wobei die Auswahl (34) der Mittel zur Zustellung und Wiedergabe der Nachricht darin besteht, unter den zugänglichen Stationen des Zielbenutzers der Nachricht und unter den verfügbaren Zugriffs- und/oder Wiedergabediensten in Abhängigkeit von den Merkmalen der verfügbaren Zugriffs- und/oder Wiedergabedienste und von den Merkmalen der Nachricht den Zugriffs- und/oder Wiedergabedienst auszuwählen, der für den Empfang und die Wiedergabe der Nachricht am besten geeignet ist, wobei das Verfahren außerdem einen Schritt der Parametrierung des gewählten Zugriffs- und/oder Wiedergabedienstes an der Station, wo der Dienst verfügbar ist, umfasst.

6. Verfahren nach Anspruch 5, **dadurch gekennzeichnet, dass** es außerdem einen Schritt des Zugriffs auf einen Drittdienst (9) über ein Netz (10) aufweist.

7. Verfahren nach einem der Ansprüche 4 bis 6, **dadurch gekennzeichnet, dass** es außerdem Schritte aufweist, die darin bestehen:
- in Abhängigkeit von den Präferenzen des Zielbenutzers der Nachricht zu prüfen, ob der Zielbenutzer für den Benutzer, welcher Absender der Nachricht ist, zur Verfügung steht,
- in Abhängigkeit vom Typ der Nachricht die Stationen des Zielbenutzers der Nachricht zu bestimmen, die zugänglich und für die Wiedergabe der Nachricht verwendbar sind, und
- für jede verwendbare Station verfügbare Zugriffs- und/oder Wiedergabedienste zu bestimmen, die es ermöglichen, die Nachricht zuzustellen und wiederzugeben, in Abhängigkeit von den Merkmalen der Station und von den verfügbaren Diensten.

8. System zum Anpassen eines elektronischen Nachrichtendienstes, der mit Hilfe von Benutzerstationen (11) zugänglich ist, die an mindestens ein Datenübertragungsnetz (10) angeschlossen werden können, welches mindestens einen Anpassungsserver (3) aufweist, der an das Netz (10) angeschlossen ist und aufweist:
- Mittel zum Abfragen der Empfangsboxen (8) einer Gesamtheit von angemeldeten Benutzern und zum Sammeln der empfangenen Nachrichten, die in diese eingespeichert wurden,
- Mittel zum Analysieren des Inhalts jeder der gesammelten Nachrichten,
- Mittel zum Suchen der Merkmale, die einem angemeldeten Benutzer entsprechen, der Empfänger einer Nachricht ist,
- Mittel zum Auswählen der Mittel zur Zustellung und Wiedergabe einer Nachricht, die an die gefundenen Merkmale des Zielbenutzers der Nachricht angepasst sind, in Abhängigkeit von der Analyse des Inhalts der Nachricht, und
- Mittel zum Senden einer empfangenen Nachricht an den angemeldeten Benutzer, welcher der Empfänger ist, unter Berücksichtigung der ausgewählten Mittel zur Zustellung und Wiedergabe;
und in welchem die Merkmale, die dem angemeldeten Benutzer entsprechen, Merkmale von Stationen (11) und von jeweiligen Anschlüssen dieser Stationen an die Netze (10) enthalten, wobei die Auswahlmittel so gestaltet sind, dass sie unter den zugänglichen Stationen des Zielbenutzers der Nachricht in Abhängigkeit von den Merkmalen dieser Stationen und von ihrem Anschluss an ein Netz und von den Merkmalen der Nachricht die Station auswählen, die für den Empfang und für die Wiedergabe der Nachricht am besten geeignet ist.

9. System nach Anspruch 8, **dadurch gekennzeichnet, dass** es wenigstens einen Merkmalserver (1) aufweist, der an das Netz (10) angeschlossen ist und Mittel, um von einer Station eines angemeldeten Benutzers, die an das Netz angeschlossen ist, Merkmale zu empfangen, die dem angemeldeten Benutzer entsprechen, Mittel (2), um diese Merkmale zu speichern, und Mittel, um auf Anforderung an den Anpassungsserver (3) die Merkmale eines bestimmten angemeldeten Benutzers zu liefern, aufweist.

10. System nach Anspruch 8 oder 9, **dadurch gekennzeichnet, dass** der Anpassungsserver (3) au-ßerdem Mittel aufweist, um eine Benachrichtigung über den Empfang einer Nachricht an einen angemeldeten Benutzer über den Empfang einer Nachricht, deren Empfänger er ist, zu senden, wobei die Nachricht an einen angemeldeten Benutzer auf Anforderung des angemeldeten Benutzers, der eine Benachrichtigung über den Empfang der Nachricht erhalten hat, gesendet wird (36), wobei in der Benachrichtigung über den Empfang die Station angegeben ist, die ausgewählt wurde, um die Nachricht zu empfangen.

11. System nach einem der Ansprüche 8 bis 10, **dadurch gekennzeichnet, dass** die Merkmale, die dem angemeldeten Benutzer entsprechen, Präferenzen des Benutzers umfassen, was die Zustellung und Wiedergabe von Nachrichten anbelangt, wobei die Auswahlmittel so gestaltet sind, dass sie unter den zugänglichen Stationen des Zielbenutzers der Nachricht in Abhängigkeit von den Merkmalen der Nachricht die Station auswählen, die den Präferenzen des Benutzers entspricht.

12. System nach einem der Ansprüche 8 bis 11, **dadurch gekennzeichnet, dass** die Merkmale, die dem angemeldeten Benutzer entsprechen, Merkmale von Diensten für den Zugriff und/oder die Wiedergabe des Inhalts von Nachrichten umfassen, die von Stationen aus verfügbar sind, die über ein Netz (10) zugänglich sind, wobei die Auswahlmittel so gestaltet sind, dass sie unter den zugänglichen Stationen des Zielbenutzers der Nachricht und unter den verfügbaren Zugriffs- und/oder Wiedergabediensten in Abhängigkeit von den Merkmalen der verfügbaren Zugriffs- und/oder Wiedergabedienste und von den Merkmalen der Nachricht den Zugriffs- und/oder Wiedergabedienst auswählen, der für den Empfang und die Wiedergabe der Nachricht am besten geeignet ist, wobei der Anpassungsserver (3) außerdem Mittel aufweist, um den gewählten Zugriffs- und/oder Wiedergabedienst an der Station, wo der Dienst verfügbar ist, zu parametrieren.

13. System nach Anspruch 12, **dadurch gekennzeichnet, dass** der Anpassungsserver (3) außerdem Mittel aufweist, um einen über ein Netz (10) zugänglichen Drittdienst (9) auszuwählen, der einzusetzen ist, um eine Nachricht wiederzugeben.

14. System nach Anspruch 12 oder 13, **dadurch gekennzeichnet, dass** die Benachrichtigung über den Empfang einer Nachricht Referenzangaben des Zugriffs- und/oder Wiedergabedienstes, der zu verwenden ist, um die Nachricht wiederzugeben, und Parameter, die auf den Zugriffs- und/oder Wiedergabedienst anzuwenden sind, angibt.

15. System nach einem der Ansprüche 11 bis 14, **dadurch gekennzeichnet, dass** es außerdem einen Arbitrageserver (70) aufweist, welcher aufweist:
- Mittel, um in Abhängigkeit von den Präferenzen des Zielbenutzers der Nachricht zu prüfen, ob der Zielbenutzer für den Benutzer, welcher Absender der Nachricht ist, zur Verfügung steht,
- Mittel, um in Abhängigkeit vom Typ der Nachricht die Stationen des Zielbenutzers der Nachricht zu bestimmen, die zugänglich und für die Wiedergabe der Nachricht verwendbar sind, und
- Mittel, um für jede verwendbare Station verfügbare Zugriffs- und/oder Wiedergabedienste zu bestimmen, die es ermöglichen, die Nachricht zuzustellen und wiederzugeben, in Abhängigkeit von den Merkmalen der Station und von den verfügbaren Diensten.
